# EUROPEAN PATENT SPECIFICATION

(11) **EP 0 535 998 B1**
(45) Date of publication and mention of the grant of the patent: **04.03.1998**
(21) Application number: 92309061.7
(22) Date of filing: 05.10.1992
(51) Int. Cl.: B29C 65/74, B29C 67/00, B29C 65/18, B26D 7/10

(54) **Improvements in the manufacture of package blanks**
Herstellung von Verpackungszuschnitten
Fabrication de flancs d'emballage

(30) Priority: 04.10.1991 GB 9121218
(43) Date of publication of application: 07.04.1993
(73) Proprietor: CAIRWAY LIMITED, Grimsby South Humberside DN32 2TB (GB)
(72) Inventor: Bacon, Edward Philip, Fotherby, Louth LW11 0UG, Lincolnshire (GB)
(74) Representative: Johnson, Terence Leslie

(56) References cited:
- EP-A- 0 083 030
- EP-A- 0 219 774
- DE-A- 3 318 937
- DE-A- 3 813 102
- DE-A- 3 813 104
- FR-A- 1 492 896
- FR-A- 2 185 227
- GB-A- 602 990
- GB-A- 955 334
- NL-C- 78 210
- US-A- 3 484 325
- US-A- 4 675 241
- PATENT ABSTRACTS OF JAPAN vol. 7, no. 16 (M-187)(1161) 22 January 1983 & JP-A-57 173 126 (NISSAN JIDOSHA K.K.) 25 October 1982

## Description

The invention relates to improvements in the manufacture of package blanks.

Package blanks for boxes, box-lids or the like, from which collapsible substantially rigid boxes, box-lids or the like may be formed, are often manufactured from sheets of material which are twin-walled and comprise substantially parallel webs which are spaced apart by integral walls which extend substantially parallel to each other and at right angles to the planes of the webs to give a fluted material. The sheets are conveniently made by an extrusion process. The construction of the blanks provides strength and lightness. The cutting of such sheets of material and the subsequent sealing of the cut channels during manufacture is often slow and inefficient. Examples of prior art apparatus can be found in DE-A-3813104, DE 3 318 937A and NL-C-78 210.

It is an object of this invention to seek to mitigate the disadvantage of the prior art.

According to a first aspect of the invention there is provided apparatus for creasing and/or cutting a sheet of heat deformable material to form a blank, comprising two opposed platens each carrying a forming profile and one of which platens at least is heatable, the platens being mounted in the apparatus for reciprocable movement towards and away from each other, the forming profiles having a complementary configuration whereby to form a desired moulding in a sheet of heat deformable material when the platen(s) is/are brought towards each other for a predetermined period of time to define a desired shape in the material, characterised in that the forming profiles have parts which extend sharply away from the material of the blank adjacent the cut and/or crease, so that the said material retains its physical integrity.

Both platens may be heatable. This provides for a symmetrical mould formation.

One forming profile may have a nib projecting toward a profiled element of the other platen. This provides for a cutting operation.

The forming profiles may have parts which may extend sharply away from the respective nib or element. This provides for localised heating at a cut or crease, so that the body of the sheet retains its physical integrity, as it is not softened.

The profiled nib may comprise a cutting element. This provides a clean cut.

The forming profile may be set in a carrier which is indirectly heated by a heater means. This provides for control of heating in use, particularly as the carrier may comprise an aluminium plate.

The forming element opposite the nib may be directly heated by an external heating source. This provides a rapid response time during heating.

The forming elements may be carried by a non-heat conductive plate. This again provides for control of a moulding operation using the method.

The forming profiles may be arranged in any desired configuration. This provides flexibility in use as a variety of creases or cuts can be used in a conversion operation.

According to a second aspect of the invention there is provided a method of creasing and/or cutting a sheet of heat deformable material to form a blank, comprising the steps of providing opposed platens each carrying a forming profile, providing that one of which platens if heatable, providing for reciprocable movement of the platens towards and away from one another, and providing that the forming profiles have a complementary configuration whereby to form a desired moulding in a sheet of heat deformable material when the platen(s) is/are heated and are brought towards each other for a predetermined period of time to define a desired shape in the material, and characterised in that the forming profiles have parts which extend sharply away from the material of the blank adjacent the cut or crease, so that the said material retains is physical integrity.

Using the invention it is possible to provide apparatus for sealing channels in a sheet of heat deformable material comprising a first heatable member having a forming or cutting profile, a second heatable member having a profile of complementary shape to the forming or cutting profile, the arrangement being such that in use the sheet is pressed by the forming or cutting profile against the complementary profile to generate a sealed edge in the sheet in a single operation.

Also, using the invention it is further possible to provide a method of sealing channels in a sheet of heat deformable material comprising providing a first heatable member having a forming or cutting profile, a second heatable member having a profile of complementary shape to the forming or cutting profile, heating the first and second heatable members, and pressing the sheet of heat deformable material against the complementary profile using the forming or cutting profile to generate a sealed edge in the sheet in a single operation.

The first heatable platen or member may be connected in use to a heat source.

The cutting profile of the first member may comprise a knife edge of a heatable tooling member.

The knife edge may define the outer boundary of a quadrilateral or similar shape corresponding to the shape which is to be incised in said sheet of heat deformable material.

The knife edge may be set in non conductive material.

The second heatable member may comprise a heatable cutting plate connected in use to a heat source.

The complementary profile may comprise a raised metal element, adapted to cooperate in use with said cutting edge, and situated on the upper surface of said heatable cutting plate.

There may be automatic means in use for feeding the sheets of deformable material to be sealed onto said heatable cutting plate.

Apparatus and a method, embodying the invention are hereinafter described, by way of example, with reference to the accompanying drawings.
Fig. 1 shows a front view of apparatus in accordance with a first aspect of the invention;
Fig. 2 shows a front inverted view in enlarged cross-section of part of the apparatus of Fig. 1 with parts omitted for clarity;
Fig. 3 shows a plan view of a forming profile of the apparatus; and
Fig. 4 shows schematically at 'A' and 'B' respectively two other embodiments of the apparatus.

Referring to the drawings there is shown apparatus 1 for forming creases and/or cutting a sheet of heat deformable material particularly a fluted sheet of material so that channels therein are sealed by the apparatus.

The apparatus comprises a first heatable member 2 having a forming or cutting profile 3, and a second heatable member 4 having a forming profile 5 of complementary shape to the profile 3. The first heatable member 2 comprises an aluminium platen 7 having a heatable tool 8 carrying the profile 3 in the form of a cutting nib 9. The tool is embedded in and projects from the platen 4, which is heated by means of a heater plate 6' and a heat source 6. The cutting profile 3 consists of the knife edge 9 of the heatable tooling member 8. The knife edge 9 defines the outer boundary of a quadrilateral 10 which corresponds to the shape to be incised in or from the sheet 'S' of deformable material. The knife edge 9 is set in non conductive material 11.

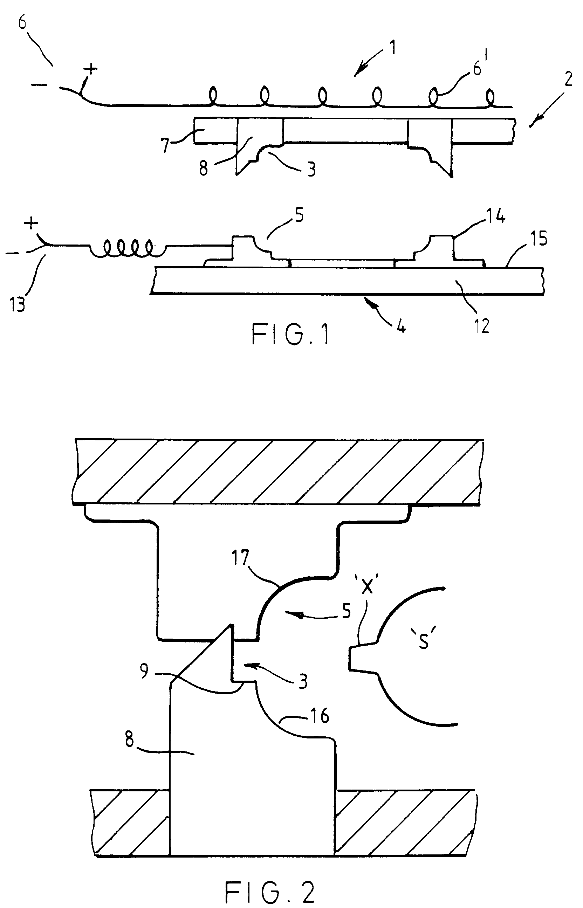

The second heatable member 4 comprises a platen in the form of a cutting plate 12 which is heated directly in use by means of heat source 13. The forming profile 5 (complementary to the profile 3) comprises a raised metal element 14 of stepped configuration adapted to cooperate in use with the knife edge 9 and mounted on the upper (as viewed in Fig. 1) surface 15 of the heatable cutting plate 12, rather than being inset as is profile 3.

Both forming profiles include a part 16 which extends sharply away from the respective nib 9 or flat, stepped profile 5 by having respective curved parts 16, 17.

In use, the sheet of deformable material 'S' to be sealed is fed between the platens 7, 12 which are separated sufficiently for the sheet to pass between profiles 5 and 8, the latter of which is then suspended thereover. The heater plate 6' and the platen 12 are heated via respective sources 6, 13.

The sheet 'S' is then heated from both sides at positions adjacent the nib 3 and profile 5, the curved parts 16, 17 ensuring that the rest of the sheet is not heated as the curved spaces provide for dissipation of heat and hence that part of the surface of the material 'S' is not heated. If now the platens are moved together the nib 3 with its knife edge 9 comes into contact with the sheet material, now softened by heat, and as the contact is made it presses the material against the profile 5 of the heated cutting plate which profile 5 then acts as an anvil, so that the knife 9 can pass through the material to be received in a complementary notch or rebate in the profile 5. Thus the edge of the material is cut cleanly, and sealed so that flutes in the material are sealed too, at 'X'.

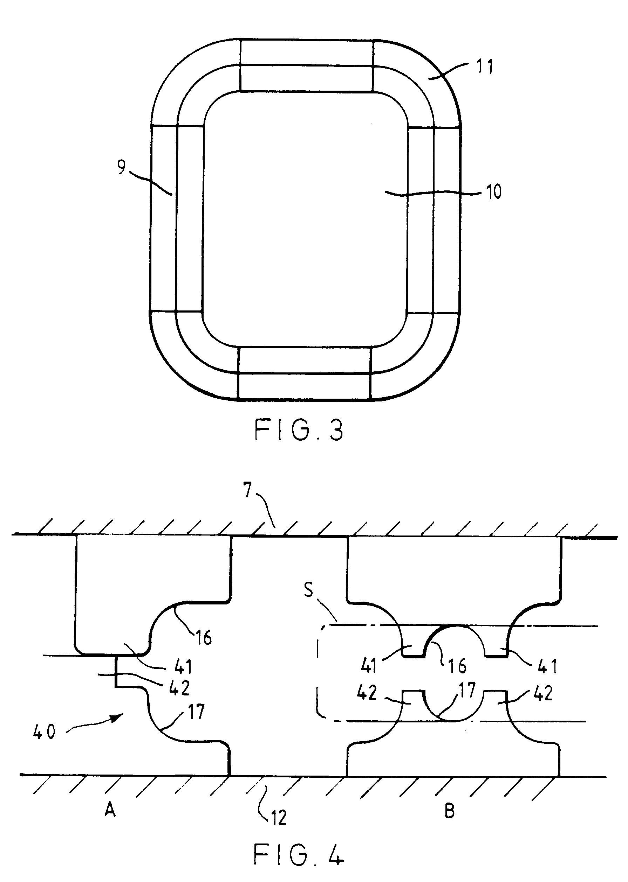

Fig. 4 shows an embodiment similar to that of Figs. 1 to 3 so like numerals are used for like parts. The Fig. 4 embodiment 40 is used for forming internal creases in a sheet of fluted plastic heat deformable material 'S', in which case the knife edge 9 is not used, instead the forming profiles 41, 42 have planar surfaces which contact the sheet material on heating and bringing the platens 7, 12 towards one another. The operation is thus similar to that described with reference to Figs. 1 to 3.

In all embodiments, it will be understood that the heat causes a smooth mould or moulded finish effectively by die moulding in that by heating the material 'S' from both sides locally at the position of forming a crease or cut using the profiles 5, 8 or 41, 42 which form a die, a symmetrical, smooth edge is formed, the heating making it easier to cut or form a crease. Thus heat and the shapes of the profiles provide the desired cutting or creasing effect, and not pressure per se which results in an energy conserving apparatus and method. In all embodiments, a suitable temperature is about 180°C, and this, allied with an appropriate time, say 5 seconds, results in a clean, smooth moulded edge 'X' or crease.

It will be understood too that in the apparatus and method described, by control of temperature, pressure and timing the sheet 7 is cut or creased and the flutes sealed in a single operation. Thus the platens are mounted on suitable carriers and control of the movement thereof, of the heating temperature, time of heating, and pressure are controlled using suitable sensors and timers, which may be numerically controlled. These are not described in detail.

Sealing of the flutes is an important advantage because fluted material of the kind described is often used for packing, storing and transport of produce such as fresh fish, vegetables, fruit or other comestibles. If flutes are open at the edges of the sheet, they can entrap, say, blood from say fish or meat, or other contaminants which when the material is reused, is a danger to hygiene, because it is difficult to clean out the flutes, which might be extensive throughout the material. The apparatus and method produce a sheet material with sealed edge flutes, or creases without exposing (i.e. rupturing) the flutes, so rendering the whole sheet material clean and hygienic as it can be washed or sterilised on its external surfaces in the knowledge that there is no internal contamination in the flutes. Packaging using the material can then be re-used without contamination of a subsequent load.

It will also be understood that by use of the apparatus, any desired configuration of profiles can be used not only straight ones, for example the rectangle of Fig. 3 or sinuous lines, curved or the like, which greatly enhance the flexibility of conversion operations - conversion being the term used when a flat blank of material is cut and creased to provide on erection a container of a desired configuration made from the cut and creased blank.

Further, the apparatus and method may be used with non fluted heat deformable sheet material too.

## Claims

1. Apparatus (1) for creasing and/or cutting a sheet of heat deformable material to form a blank, comprising two opposed platens (7,12) each carrying a forming profile (3,5) and one of which platens (7,12) at least is heatable, the platens being mounted in the apparatus (1) for reciprocable movement towards and away from each other, the forming profiles having a complementary configuration whereby to form a desired moulding in a sheet of heat deformable material when the platen(s) is/are brought towards each other for a predetermined period of time to define a desired shape in the material, characterised in that the forming profiles have parts (16,17) which extend sharply away from the material of the blank adjacent the cut and/or crease, so that the said material retains its physical integrity.

2. Apparatus according to Claim 1, characterised in that both platens are heatable.

3. Apparatus according to Claim 2, characterised in that one forming profile has a nib (9) projecting towards a profiled element (5) of the other platen.

4. Apparatus according to Claim 3, characterised in that the forming profiles have parts (16,17) which extend sharply away from the respective nib or element.

5. Apparatus according to Claim 3 or Claim 4, characterised in that the profiled nib (9) comprises a cutting element.

6. Apparatus according to any of Claims 3 to 5, characterised in that the forming profile is set in a carrier (7) which is indirectly heated by a heater means (6,6').

7. Apparatus according to Claim 6, characterised in that the carrier (7) comprises an aluminium plate.

8. Apparatus according to any of claims 3 to 7, characterised in that the forming element opposite the nib (9) is directly heated by an external heating source (13).

9. Apparatus according to Claim 8, characterised in that the forming element is carried by a non-heat conductive plate (11).

10. Apparatus according to any preceding claim, characterised in that the forming profiles are arranged in any desired configuration.

11. A method of creasing and/or cutting a sheet of heat deformable material to form a blank, comprising the steps of providing opposed platens (7,12) each carrying a forming profile (3,5), providing that one of which platens (7,12) is heatable, providing for reciprocable movement of the platens towards and away from one another, and providing that the forming profiles (3,5) have a complementary configuration whereby to form a desired moulding in a sheet of heat deformable material when the platen(s) is/are heated and are brought towards each other for a predetermined period of time to define a desired shape in the material, and characterised in that the forming profiles have parts (16,17) which extend sharply away from the material of the blank adjacent the cut or crease, so that the said material retains its physical integrity.

## Patentansprüche

1. Vorrichtung (1) zum Falten und/oder Schneiden einer Platte eines wärmeverformbaren Materials zur Bildung eines Rohteils, die zwei sich gegenüberliegende Traversen (7, 12) umfaßt, die jeweils ein Formprofil (3, 5) umfassen, und mindestens eine der Traversen (7, 12) ist heizbar, wobei die Traversen in der Vorrichtung (1) für eine Hin-und-her-Bewegung aufeinander zu und voneinander weg angebracht sind, wobei die Formprofile eine komplementäre Konfiguration aufweisen, um dadurch ein gewünschtes Formteil in einer Platte eines wärmeverformbaren Materials zu bilden, wenn die Traverse(n) für ein vorgegebenes Zeitintervall aufeinander zu bewegt wird (werden), um eine gewünschte Gestalt im Material zu definieren, dadurch gekennzeichnet, daß die Formprofile Teile (16, 17) aufweisen, die sich, angrenzend an den Schnitt und/oder die Falte, scharf vom Material des Rohteils weg erstrecken, so daß die physische Integrität des genannten Materials erhalten bleibt.

2. Vorrichtung nach Anspruch 1, dadurch gekennzeichnet, daß beide Traversen heizbar sind.

3. Vorrichtung nach Anspruch 2, dadurch gekennzeichnet, daß ein Formprofil eine Spitze (9) aufweist, die auf ein Profilelement (5) der anderen Traverse zu ragt.

4. Vorrichtung nach Anspruch 3, dadurch gekennzeichnet, daß die Formprofile Teile (16, 17) aufweisen, die sich scharf von der Spitze bzw. von dem Element weg erstrecken.

5. Vorrichtung nach Anspruch 3 oder Anspruch 4, dadurch gekennzeichnet, daß die Profilspitze (9) ein Schneidelement umfaßt.

6. Vorrichtung nach einem der Ansprüche 3 bis 5, dadurch gekennzeichnet, daß das Formprofil in einem Träger (7) sitzt, der indirekt mittels eines Heizgerätmittels (6, 6') erwärmt wird.

7. Vorrichtung nach Anspruch 6, dadurch gekennzeichnet, daß der Träger (7) eine Aluminiumplatte umfaßt.

8. Vorrichtung nach einem der Ansprüche 3 bis 7, dadurch gekennzeichnet, daß das Formelement, das der Spitze (9) gegenüberliegt, direkt mittels einer externen Heizquelle (13) erwärmt wird.

9. Vorrichtung nach Anspruch 8, dadurch gekennzeichnet, daß das Formelement von einer nichtwärmeleitenden Platte (11) getragen wird.

10. Vorrichtung nach einem der vorhergehenden Ansprüche, dadurch gekennzeichnet, daß die Formprofile in einer beliebigen gewünschten Konfiguration angeordnet sind.

11. Verfahren zum Falten und/oder Schneiden einer Platte eines wärmeverformbaren Materials zur Bildung eines Rohteils, das die folgenden Schritte umfaßt: das Bereitstellen zweier sich gegenüberliegender Traversen (7, 12), die jeweils ein Formprofil (3, 5) umfassen, das Vorsehen, daß eine der Traversen (7, 12) heizbar ist, das Vorsehen einer Hin-und-her-Bewegung der Traversen aufeinander zu und voneinander weg, und das Vorsehen, daß die Formprofile (3, 5) eine komplementäre Konfiguration aufweisen, um dadurch ein gewünschtes Formteil in einer Platte eines wärmeverformbaren Materials zu bilden, wenn die Traverse(n) erwärmt wird/werden und für ein vorgegebenes Zeitintervall aufeinander zu bewegt wird/werden, um eine gewünschte Gestalt im Material zu definieren, dadurch gekennzeichnet, daß die Formprofile Teile (16, 17) aufweisen, die sich, angrenzend an den Schnitt oder die Falte, scharf vom Material des Rohteils weg erstrecken, so daß die physische Integrität des genannten Materials erhalten bleibt.

## Revendications

1. Appareil (1) pour plier et/ou découper une feuille de matière thermodéformable pour obtenir une ébauche, comprenant deux plateaux opposés (7, 12) portant chacun un profil de formage (3, 5), au moins un desdits plateaux (7, 12) étant apte à être chauffé, les plateaux étant montés dans l'appareil (1) pour effectuer un mouvement alternatif en direction et à l'écart l'un de l'autre, les profils de formage possédant une configuration complémentaire qui permet de réaliser une moulure désirée dans une feuille de matière thermodéformable lorsque le/les plateau(x) est/sont amené(s) en direction l'un de l'autre pendant un laps de temps prédéterminé pour définir une forme désirée dans la matière, caractérisé en ce que les profils de formage possèdent des parties (16, 17) qui s'étendent nettement à l'écart de la matière de l'ébauche en position adjacente à la découpe et/ou au pli, si bien que ladite matière conserve son intégrité physique.

2. Appareil selon la revendication 1, caractérisé en ce que les deux plateaux peuvent être chauffés.

3. Appareil selon la revendication 2, caractérisé en ce qu'un profil de formage comporte un talon (9) faisant saillie en direction d'un élément profilé (5) de l'autre plateau.

4. Appareil selon la revendication 3, caractérisé en ce que les profils de formage possèdent des parties (16, 17) qui s'étendent nettement à l'écart du talon ou de l'élément respectif.

5. Appareil selon la revendication 3 ou 4, caractérisé en ce que le talon profilé (9) comprend un élément de coupe.

6. Appareil selon l'une quelconque des revendications 3 à 5, caractérisé en ce que le profil de formage est logé dans un support (7) qui est chauffé indirectement par un moyen de chauffage (6, 6').

7. Appareil selon la revendication 6, caractérisé en ce que le support (7) comprend une plaque en aluminium.

8. Appareil selon l'une quelconque des revendications 3 à 7, caractérisé en ce que l'élément de formage opposé au talon (9) est chauffé directement par une source de chauffage externe (13).

9. Appareil selon la revendication 8, caractérisé en ce que l'élément de formage est supporté par une plaque non thermoconductrice (11).

10. Appareil selon l'une quelconque des revendications précédentes, caractérisé en ce que les profils de formage sont arrangés dans n'importe quelle configuration désirée.

11. Procédé pour plier et/ou découper une feuille de matière thermodéformable pour obtenir une ébauche, comprenant les étapes consistant à prévoir des plateaux opposés (7, 12) portant chacun un profil de formage (3, 5); prévoir la possibilité de chauffer un desdits plateaux (7, 12); prévoir un mouvement alternatif des plateaux en direction et à l'écart l'un de l'autre; et prévoir le fait que les profils de formage (3, 5) possèdent une configuration complémentaire permettant d'obtenir un moulage désiré dans une feuille de matière thermodéformable lorsque le/les plateau(x) est/sont chauffé(s) et est/sont amené(s) l'un vers l'autre pendant un laps de temps prédéterminé pour définir une forme désirée dans la matière, et caractérisé en ce que les profils de formage possèdent des parties (16, 17) qui s'étendent nettement à l'écart de la matière de l'ébauche en position adjacente à la découpe ou au pli, si bien que ladite matière conserve son intégrité physique.
